# EUROPÄISCHE PATENTANMELDUNG

(11) **EP 1 312 291 A1**
(43) Veröffentlichungstag der Anmeldung: **21.05.2003**
(21) Anmeldenummer: 01811116.1
(22) Anmeldetag: 20.11.2001
(51) Int. Cl.: A47J 31/057

(54) **Kaffeemaschine**

(71) Anmelder: M. Schaerer AG, 3302 Moosseedorf (CH)
(72) Erfinder: Lüssi, André, 3303 Jegenstorf (CH)
(74) Vertreter: BOVARD AG - Patentanwälte

(57) **Zusammenfassung**

Eine Kaffeemaschine umfasst eine Brüheinrichtung (6) zum Erzeugen und Ausgeben von Kaffee über eine Kaffeebezugsdüse (11) sowie einen Heisswasserboiler (2), der eine Frischwasserzuführleitung (1) und eine Heisswasserleitung (10) aufweist, die in eine Brühkammer (5) der Brüheinrichtung (6) mündet, und eine Steuereinheit (4). Mit dieser Steuereinheit (4) ist der Kaffeebezug steuerbar. Zwischen dem Heisswasserboiler (2) und der Brühkammer (5) ist an der Heisswasserleitung (10) ein Heizelement (13) angeordnet, mit welchem das vom Heisswasserboiler (2) in die Brühkammer (5) fliessende Wasser auf Brühtemperatur bringbar ist. Dadurch kann die Brühtemperatur auf einem praktisch konstanten Wert gehalten werden, wodurch die Qualität des bezogenen Kaffees verbessert wird.

## Beschreibung

Die vorliegende Erfindung bezieht sich auf eine Kaffeemaschine, welche mindestens eine Brüheinrichtung zum Erzeugen und Ausgeben von Kaffee über eine Kaffeebezugsdüse, mindestens einen Heisswasserboiler, der eine Frischwasserzuführleitung und eine Heisswasserleitung, die in eine Brühkammer der Brüheinrichtung mündet und eine Steuereinheit umfasst, mittels welcher der Kaffeebezug steuerbar ist.

Derartige Kaffeemaschinen sind in vielfältiger Weise bekannt. Gemäss diesem System können sowohl Kaffeemaschinen für Restaurationsbetriebe, Kaffeemaschinen für Industriebetriebe und Büros, aber auch Kaffeemaschinen für den Haushalt ausgestattet sein.

Um eine möglichst gute Qualität des aus der Kaffeemaschine ausgelassenen Kaffees erhalten zu können, sollte die Temperatur des Wassers in der Brühkammer, das das Kaffeepulver überbrüht, auf einer möglichst konstanten Temperatur sein (beispielsweise 95 °C). Es ist aber so, dass das sich im Heisswasserboiler befindende Heisswasser eine höhere Temperatur aufweist, da sich dieses auf dem Weg zwischen dem Heisswasserboiler und der Brühkammer abkühlt. Diese Abkühlung ist aber nicht bei jedem Kaffeebezug gleich, insbesondere ist sie davon abhängig, ob es sich um einen ersten Kaffeebezug handelt, bei welchem die Leitungen und das Ventil, das durch das Heisswasser durchlaufen wird, sowie die Brühkammer im kalten Zustand sind, oder ob diese Bereiche durch den Durchlauf des Heisswassers für vorher bezogene Kaffees erwärmt sind. Je nach Situation kann somit das Brühwasser eine zu tiefe oder eine zu hohe Temperatur aufweisen, was sich auf die Qualität des bezogenen Kaffees auswirken kann.

Eine wesentliche Grösse, die die Qualität des zu beziehenden Kaffees ebenfalls beeinflusst, ist der Druck, mit welcher das Wasser durch die Brühkammer gepresst wird. Dieser Druck kann aber in bekannter Weise durch geeignete Mittel relativ gut auf einem konstanten Wert gehalten werden.

Die Aufgabe der Erfindung besteht nun darin, eine Kaffeemaschine so zu verbessern, dass die Temperatur des Wassers, mit welchem das Kaffeepulver in der Brühkammer überbrüht wird, auf einem praktisch konstanten Wert gehalten werden kann, unabhängig davon, ob nach längerem Unterbruch ein erster Kaffee bezogen wird oder ob mehrere Kaffees hintereinander bezogen werden.

Erfindungsgemäss erfolgt die Lösung dieser Aufgabe dadurch, dass in der Kaffeemaschine zwischen dem Heisswasserboiler und der Brühkammer an der Heisswasserleitung ein Heizelement angeordnet ist, mit welchem das vom Heisswasserboiler in die Brühkammer fliessende Wasser auf Brühtemperatur bringbar ist.

Dadurch kann in vorteilhafter Weise erreicht werden, dass die Heisswassertemperatur im Heisswasserboiler auf einem tieferen Niveau gehalten werden kann, als in den üblichen Kaffeemaschinen, das in die Brühkammer einzuleitende Heisswasser zur Herstellung eines Kaffees wird durch dieses Heizelement vor dem Eintritt in die Brühkammer auf die gewünschte Brühtemperatur gebracht, unabhängig davon, ob sich das Heisswasser auf dem Weg zwischen dem Heisswasserboiler und diesem Heizelement stärker oder weniger stark abgekühlt hat.

In vorteilhafter Weise besteht das Heizelement aus einem Körper, der aus einem wärmeleitfähigen Material gebildet ist, durch welchen das Heisswasser leitbar ist, und in welchem eine temperaturregelbare Heizung und ein Temperatursensor integriert ist. Durch die Verwendung des Körpers wird eine gewisse Wärmespeicherung in diesem Heizelement erreicht, mit der temperaturregelbaren Heizung und dem Temperatursensor kann diejenige Wärmemenge zugeführt werden, die nötig ist, um das das Heizelement durchlaufende Wasser auf die gewünschte Brühtemperatur zu bringen.

Eine weitere vorteilhafte Ausgestaltung der Erfindung besteht darin, dass das Heizelement nach einem Ventil, mit welchem die Zufuhr von Warmwasser in die Brühkammer zur Erzeugung von Kaffee steuerbar ist, und welches zwischen dem Heisswasserboiler und der Brühkammer in der Heisswasserleitung angeordnet ist, in unmittelbarer Nähe der Brühkammer angebracht ist. Dadurch wird ein Wärmeverlust des in die Brühkammer eingeleiteten Heisswassers nach dem Durchlauf des Heizelementes praktisch vermieden.

Eine weitere vorteilhafte Ausgestaltung der Erfindung besteht darin, dass die zwischen dem Ventil und der Brühkammer verlaufende Heisswasserleitung durch Umschalten des Ventiles mit einer Restwasserabfuhrleitung verbindbar ist. Somit kann nach dem Bezug eines Kaffees die Heisswasserleitung entleert werden, wodurch vermieden wird, dass bei längerem Stillstand der Kaffeemaschine insbesondere ein zwischen dem Heizelement und der Brühkammer verbleibender Wasserrest abkühlen und bei Bezug eines neuerlichen Kaffees im stark abgekühlten Zustand in die Brühkammer gelangen könnte.

In vorteilhafter Weise kann im Bereich des Austritts der Heisswasserleitung aus dem Heizelement ein Temperaturfühler angeordnet sein, mit welchem die Temperatur des Heisswassers festgestellt werden kann. Der Temperaturfühler ist mit der Steuereinheit verbunden, wodurch die Heizung des Heizelementes in Abhängigkeit der gemessenen Temperatur des Wassers regulierbar ist. Dadurch wird in einfacher Weise erreicht, dass das Wasser eine praktisch konstante Temperatur aufweist.

An Stelle der Verwendung eines Temperatursensors zur Regelung der Wassertemperatur kann das Heizelement auch in Abhängigkeit von Parameterwerten aktiviert werden, welche Parameterwerte in Speichermitteln speicherbar sind, die in der Steuereinheit vorgesehen sind. Dadurch kann in vorteilhafter Weise die Temperatur des in die Brühkammer einführbaren Wassers konstant gehalten werden, ohne dass zusätzliche Fühler oder Sensoren erforderlich sind.

Ausführungsformen der vorliegenden Erfindung werden nachfolgend anhand der beiliegenden Zeichnung beispielhaft näher erläutert.

Es zeigt:
Fig. 1 in schematischer Darstellung die Anordnung des Heizelementes in einer Kaffeemaschine als erstes Ausführungsbeispiel;
Fig. 2 in schematischer Darstellung die Anordnung eines Heizelementes in einer Kaffeemaschine nach einem zweiten Ausführungsbeispiel; und
Fig. 3 in graphischer Darstellung den Temperaturverlauf des in die Brühkammer einlaufenden Wassers in einer konventionellen Kaffeemaschine und einer erfindungsgemässen Kaffeemaschine.

Wie aus der schematischen Darstellung der für die Erfindung wesentlichen Elemente einer Kaffeemaschine ersichtlich ist, wird Frischwasser über eine Frischwasserzuführleitung 1 in einen Heisswasserboiler 2 der Kaffeemaschine eingeführt. Dies kann beispielsweise mittels einer Pumpe aus einem Frischwasserbehälter oder ab Frischwassernetz erfolgen, welche nicht dargestellt sind. Im Heisswasserboiler wird das Wasser durch eine Heizung 3, die mit einer Steuereinheit 4 verbunden ist, aufgeheizt. Über einen Temperatursensor 5, der ebenfalls mit der Steuereinheit 4 verbunden ist, wird die Heizung 3 so aktiviert, dass das Wasser im Heisswasserboiler 2 auf einer etwa konstanten Temperatur gehalten wird. Diese Temperatur kann etwa der gewünschten Brühtemperatur des Wassers entsprechen. Das Wasser im Heisswasserboiler steht unter Druck, beispielsweise bei etwa 11 bar.

Wenn nun ein Kaffee bezogen werden soll, wird in bekannter Weise frisch gemahlenes Kaffeepulver in die Brühkammer 5 der Brüheinrichtung 6 eingefüllt, die Brühkammer wird dann durch zwei Kolben 7 und 8 geschlossen. Das Ventil 9 wird in die Position gebracht, dass das Heisswasser aus dem Boiler 2 in die Heisswasserleitung 10 gelangen kann. Diese Heisswasserleitung 10 führt das Heisswasser über den Kolben 8 in die Brühkammer 5, wo das Kaffeepulver überbrüht wird, der gebrühte Kaffee gelangt durch den Kolben 7 in die Kaffeebezugsdüse 11 und von dort in die Kaffeetasse 12.

Unmittelbar vor der Brühkammer 5 durchläuft die Heisswasserleitung 10 ein Heizelement 13. Dieses Heizelement 13 ist durch einen aus einem wärmeleitfähigen Material bestehenden Körper 14 gebildet, beispielsweise aus Aluminium. In diesem Körper 14 ist eine temperaturregelbare Heizung 15 und ein Temperatursensor 16 integriert, die mit der Steuereinheit 4 verbunden sind. Ferner ist im Bereich des Austritts der Heisswasserleitung 10 aus dem Heizelement 13 ein Temperaturfühler 17 angeordnet, mit welchem die Temperatur des Heisswassers feststellbar ist. Beim Bezug eines Kaffees wird die Heizung 15 des Heizelementes 13 durch die Steuereinheit 4 aktiviert und bringt den Körper 14 rasch auf eine Temperatur, die der Brühtemperatur von zirka 95 °C entspricht. Wenn das Wasser durch die Heisswasserleitung 10 hindurch fliesst, wird durch den Temperatursensor 16 dessen Temperatur gemessen, auf Grund dieser gemessenen Temperatur wird durch die Steuereinheit 4 das Heizelement 13 so geregelt, dass die Brühtemperatur des Wassers, das in die Brühkammer 5 eingeleitet wird, praktisch konstant bleibt.

Wenn die erforderliche Wassermenge das Ventil durchlaufen hat, das für den Kaffeebezug erforderlich ist, was in bekannter Weise durch einen Durchflussmesser festgestellt wird, bewirkt die Steuerung neben dem Abstellen der Pumpe ein Schliessen des Ventils 9. Das Ventil 9 wird dann so geschaltet, dass die Heisswasserleitung 10 mit einer Restwasserabfuhrleitung 18 verbunden wird, wodurch das sich in der Heisswasserleitung 10 befindende Wasser in bekannter Weise in einen nicht dargestellten Restwasserbehälter abgeleitet wird. Damit wird vermieden, dass Wasser in der Heisswasserleitung 10 zurück bleibt und sich bei längerem Nichtgebrauch der Kaffeemaschine insbesondere im Bereich nach dem Heizelement 13 und vor der Brühkammer 5 abkühlen kann. Wenn diese Leitung nicht entleert würde, würde beim nächsten Kaffeebezug dieses abgekühlte Wasser zuerst in Kontakt kommen mit dem zu überbrühenden Kaffeepulver, wodurch die Qualität des ausgegebenen Kaffees beeinträchtigt werden könnte.

Mit dieser Einrichtung ist gewährleistet, dass das in die Brühkammer gelangende Wasser immer praktisch die Brühtemperatur hat, unabhängig davon, ob ein normaler Kaffee mit grösserer Wassermenge oder ein Espresso mit relativ kleiner Wassermenge bezogen wird, und auch unabhängig davon, ob es jeweils der erste Kaffee bzw. Espressokaffee ist, der nach einem längeren Unterbruch der Kaffeemaschine bezogen wird oder ob vorher bereits mehrere Kaffees bezogen worden sind. Dadurch wird die Qualität des bezogenen Kaffees gewährleistet.

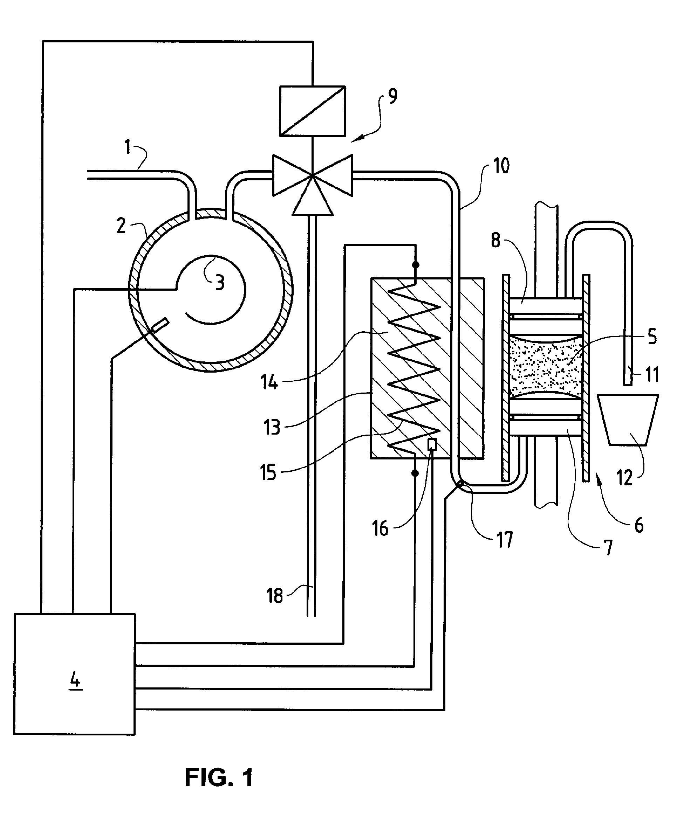

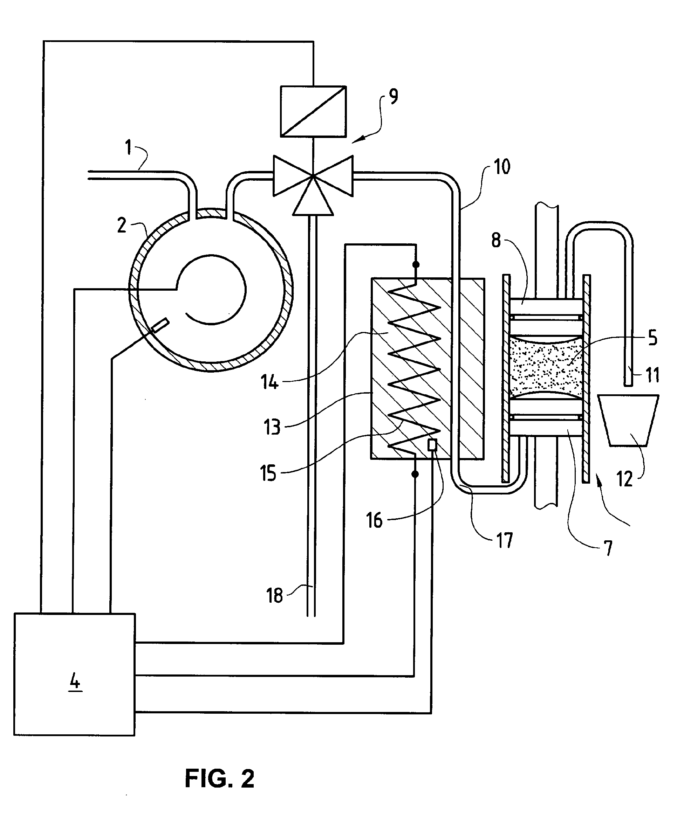

In Fig. 2 ist in schematischer Darstellung praktisch eine gleiche Kaffeemaschine ersichtlich, wie in Fig. 1. In dieser Figur werden die Elemente mit den selben Bezugszeichen versehen, wie die entsprechenden Elemente gemäss Fig. 1. Der einzige Unterschied besteht darin, dass der Temperaturfühler 17 (Fig. 1) in diesem Ausführungsbeispiel weggelassen wird.

Der Bezug von Kaffee erfolgt in identischer Weise, wie dies zu Fig. 1 beschrieben worden ist, wobei die Heizung 15 auf Grund von Parameterwerten durch die Steuereinheit aktiviert wird, welche Parameterwerte in bekannter Weise in Speichermitteln in der Steuereinheit abspeicherbar sind. Diese Parameterwerte sind einerseits Erfahrungswerte, wie sich die vom Heisswasser durchlaufenen Elemente in Abhängigkeit der Zeit abkühlen, und wie die Erwärmung in Abhängigkeit der durchgeleiteten Wassermenge erfolgt. Weitere Parameterwerte sind, ob ein normaler Kaffee oder ein Espressokaffee bezogen wird, welche Zeit verstrichen ist vom letzten Bezug eines Kaffees oder eines Espressokaffees bis zum Bezug eines neuerlichen Kaffees bzw. Espressokaffees. Auf Grund dieser Parameterwerte berechnet die Steuereinheit, welche Wärmemenge durch das Heizelement an das dieses Heizelement durchströmende Wasser abzugeben ist, und steuert entsprechend die Heizung des Heizelementes. Die Parameterwerte, die Erfahrungswerte sind, wurden in Langzeitversuchen an einer mit den erforderlichen Messmitteln ausgerüsteten entsprechenden Kaffeemaschine ermittelt.

Mit den gemäss der Erfindung ausgebildeten Kaffeemaschinen wird es möglich, dass das in die Brühkammern gelangende Brühwasser, mit dem das Kaffeepulver überbrüht wird und somit der Kaffee geliefert wird, im wesentlichen eine konstante Temperatur aufweist, wodurch die Qualität des Kaffees gesteigert werden kann.

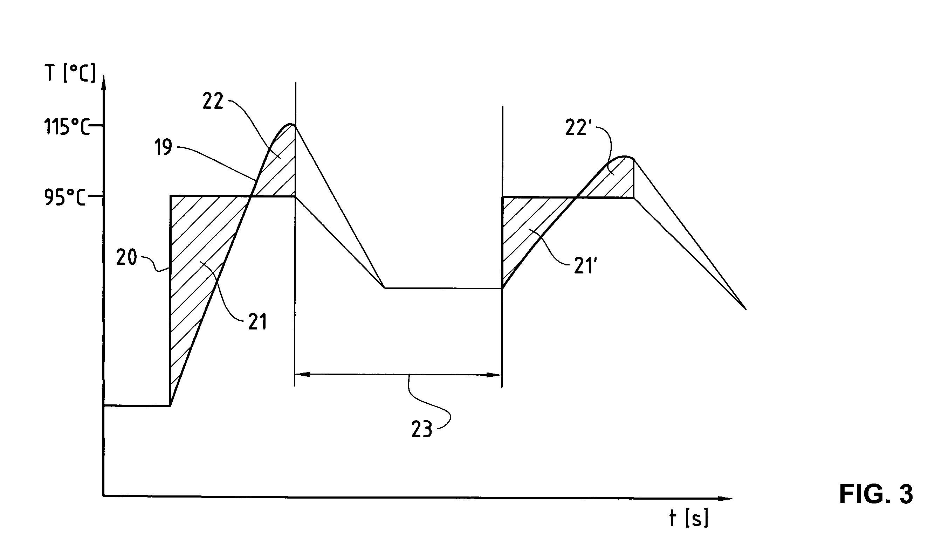

Aus dem Zeittemperaturdiagramm, das in Fig. 3 dargestellt worden ist, zeigt die Kurve 19 den Temperaturverlauf des Brühwassers beim Eintritt in die Brühkammer einer konventionellen Maschine, während die Kurve 20 den Temperaturverlauf einer erfindungsgemäss ausgestatteten Kaffeemaschine zeigt. Bei der konventionellen Maschine (Kurve 19) hat das zuerst in die Brühkammer eingeleitete Wasser eine zu tiefe Temperatur, da die Elemente in der Heisswasserleitung zuerst aufgewärmt werden müssen. Im Verlauf des Brühvorganges steigt die Temperatur und überschreitet die optimale Brühtemperatur von 95 °C, da das Wasser im Heisswasserboiler eine höhere Temperatur aufweist, als diese 95 °C, um überhaupt die Brühtemperatur erreichen zu können.

Mit der erfindungsgemässen Kaffeemaschine wird das Wasser vor dem Eintritt in die Brühkammer durch das Heizelement auf 95 °C erwärmt und auf dieser Temperatur konstant gehalten, wie dies der Kurve 20 entnehmbar ist. Bei der konventionellen Kaffeemaschine wird somit ein erster Teil des Kaffees mit einer zu tiefen Temperatur gebrüht, dargestellt durch die schraffierte Fläche 21, während der letzte Teil des Kaffees mit zu hoher Temperatur gebrüht wurde, dargestellt durch die schraffierte Fläche 22. Wenn nach einer bestimmten Zeit, dargestellt durch den Doppelpfeil 23, jeweils ein neuer Kaffee bezogen wird, sind die Temperaturunterschiede des Brühwassers in der konventionellen Maschine geringer geworden, da sich die vom Heisswasser durchflossenen Elemente noch nicht allzu stark abgekühlt haben. Man erhält aber immer noch einen Teil zu kalt gebrühten Kaffee und einen Teil zu warm gebrühten Kaffee, wie dies durch die Flächen 21' und 22' dargestellt ist.

Mit der erfindungsgemässen Kaffeemaschine wird dagegen wiederum die optimale Brühtemperatur beibehalten.

## Patentansprüche

1. Kaffeemaschine, welche mindestens eine Brüheinrichtung (6) zum Erzeugen und Ausgeben von Kaffee über eine Kaffeebezugsdüse (11), mindestens einen Heisswasserboiler (2), der eine Frischwasserzuführleitung (1) und eine Heisswasserleitung (10), die in eine Brühkammer (5) der Brüheinrichtung (6) mündet, und eine Steuereinheit (4) umfasst, mittels welcher der Kaffeebezug steuerbar ist, **dadurch gekennzeichnet, dass** zwischen dem Heisswasserboiler (2) und der Brühkammer (5) an der Heisswasserleitung (10) ein Heizelement (13) angeordnet ist, mit welchem das vom Heisswasserboiler (2) in die Brühkammer (5) fliessende Wasser auf Brühtemperatur bringbar ist.

2. Kaffeemaschine nach Anspruch 1, **dadurch gekennzeichnet, dass** das Heizelement (13) durch einen aus einem wärmeleitfähigen Material bestehenden Körper (14) gebildet ist, durch welchen das Heisswasser leitbar ist, und in welchem eine temperaturregelbare Heizung (15) und ein Temperatursensor (16) integriert ist.

3. Kaffeemaschine nach Anspruch 1 oder 2, **dadurch gekennzeichnet, dass** das Heizelement (13) nach einem Ventil (9), mit welchem die Zufuhr von Warmwasser in die Brühkammer (5) zur Erzeugung von Kaffee steuerbar ist, und welches zwischen dem Heisswasserboiler (2) und der Brühkammer (5) in der Heisswasserleitung (10) angeordnet ist, in unmittelbarer Nähe der Brühkammer (5) angebracht ist.

4. Kaffeemaschine nach einem der Ansprüche 1 bis 3, **dadurch gekennzeichnet, dass** die zwischen dem Ventil (9) und der Brühkammer (5) verlaufende Heisswasserleitung (10) durch Umschalten des Ventils (9) mit einer Restwasserabführleitung (18) verbindbar ist.

5. Kaffeemaschine nach einem der Ansprüche 1 bis 4, **dadurch gekennzeichnet, dass** im Bereich des Austritts der Heisswasserleitung (10) aus dem Heizelement (13) ein Temperaturfühler (17) angeordnet ist, mit welchem die Temperatur des Heisswassers feststellbar ist.

6. Kaffeemaschine nach Anspruch 5, **dadurch gekennzeichnet, dass** der Temperaturfühler (17) mit der Steuereinheit (4) verbunden ist, mittels welchen die Heizung (15) des Heizelements (13) in Abhängigkeit der gemessenen Temperatur regulierbar ist.

7. Kaffeemaschine nach einem der Ansprüche 1 bis 4, **dadurch gekennzeichnet, dass** die Heizung (15) des Heizelements (13) in Abhängigkeit von Parameterwerten aktivierbar ist, welche Parameterwerte in Speichermitteln speicherbar sind, die in der Steuerungseinheit vorgesehen sind.
